(19) **Europäisches Patentamt**
**European Patent Office**
**Office européen des brevets**

(11) **EP 2 391 075 B1**

(12) **EUROPEAN PATENT SPECIFICATION**

(45) Date of publication and mention
of the grant of the patent:
**19.12.2012 Bulletin 2012/51**

(51) Int Cl.:
***H04L 12/58*** *(2006.01)*

(21) Application number: **10305567.9**

(22) Date of filing: **28.05.2010**

(54) **System and method for non intrusive delivery of messages to a device**

System und Verfahren zur nichtintrusiven Lieferung von Nachrichten an eine Vorrichtung

Système et procédé pour la fourniture non intrusive de messages à un dispositif

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**30.11.2011 Bulletin 2011/48**

(73) Proprietor: **Prim'Vision**
**06560 Valbonne (FR)**

(72) Inventors:
• **Maurel, Georges**
**06000, NICE (FR)**
• **Giraud, Christina**
**06000, NICE (FR)**
• **Sarti, Laurence**
**06000, NICE (FR)**

(74) Representative: **Hautier, Nicolas**
**Cabinet Hautier**
**20, rue de la Liberté**
**06000 Nice (FR)**

(56) References cited:
**WO-A1-2006/016885     WO-A1-2007/110093**
**US-B1- 7 586 956**

**EP 2 391 075 B1**

**Description**

The technical domain of the invention is the domain of the delivery of messages to a user at any time and at any place, in a non intrusive way and taking into account the context and the interests of the user.

A device and in particular a mobile device such as a mobile phone is part of a user's private space. It goes with the user everywhere and around the clock. Today's form of advertising through delivery of messages does not respect user privacy.

Current traditional advertisement delivering models, for example mobile messaging, are based on broadcasting to a large and "passive" population, with no possible interaction by the user.

Today's mobile internet displays Mobile Web advertisement banners onto the mobile phone, with few distinction made to the person and with few possibility for the user to avoid the advertisement content displayed.

Current models do not build trust and confidence. They do not offer enough user customization or adaptation. This leads to an intrusive user experience, limiting user acceptance toward advertisment.

An example of known solution is described in the patent US7,586,956.

The problem of the invention consists in providing, in a non intrusive way, a user with messages such as advertisements that are highly relevant in regard with the context and interests of the user, at any time and at any place.

Therefore, it is an object of the invention to provide a method for non intrusive delivery of messages to a device, characterized in that it comprises the steps of:

-    at a server, identifying messages according to historical data, preferably created from feedbacks received from devices and sending the identified messages to a given device through a network,
-    at the device, receiving the messages,
-    upon reception of the received message, filtering, in function of a user's profile stored in storage means of the device, retained messages to be stored in the storage means of the device and messages to be removed from the device,
-    storing retained messages in the storage means of the device,
-    detecting an interstitial event,
-    determining whether said interstitial event matches at least one interstitial event type defined by a user's profile stored in the device,
-    if said interstitial event matches at least one interstitial event type defined by the user's profile, selecting a message matching said device user's profile,
-    displaying on the device a message invitation requesting a consent from the user, the message invitation may optionally depends, at least in part, on the selected message,
-    if device receives the user's consent, then displaying on the device said main part of said selected message.

Therefore, the invention is based on an on-device, on-demand, on-the-spot user opt-in.

It provides messages such as advertisements at any time and wherever the user is located. Moreover, the messages are selected according to the user's profile. Such selection takes into account real time data such as the location of the user and the time.

Furthermore, the user's profile can be updated locally. Thus the invention allows adapting said profile and therefore the selection of the message even in case the device is not connected to a network or in case the connection between the mobile device and a server providing messages is interrupted. Thus, relevancy of the selected message is significantly enhanced wherever the user is located.

While relevancy of the message selection is continuously maintained, privacy of the user is preserved since no personal data needs to be send to the server. All personal data are stored locally only. Data send to the server are anonymous and allows providing historical data.

Moreover, the mechanism of displaying message introduction allows teasing the user and providing him with hints regarding the coming message without being intrusive which therefore leads to enhance the efficiency of message.

The messages are advertisements.

Optionally, the invention may comprise any one of the features below.

According to another feature of the invention, said device user's profile comprises for each interstitial event type, time(s), location(s) and/or social context(s) for which said event type may be allowed.

According to another feature of the invention, said device user's profile comprises for each advertisement type, time(s), location(s) and/or social context(s) for which said advertisement type may be accepted by the user.

According to another feature of the invention, upon selection of a message and before displaying a message invitation, the method comprises a step of providing a trailer message arranged for drawing user's attention; then the trailer message ends allowing thereby the user to freely conduct an operation on the device; then detecting the end of the operation conducted by the user; then once the operation ends, conducting the step of displaying the message invitation. Preferably, the trailer message gives a clue of the content of the main part of the message to be displayed.

According to another feature of the invention, only anonymous data are sent from the mobile device to the server.

According to another feature of the invention, an advertisement invitation may comprise a visual part, giving a clue of the content of the main part of the advertisement.

According to another feature of the invention, an advertisement invitation further comprises a sound part.

According to another feature of the invention, an advertisement invitation is accompanied by a graphical animated avatar. The avatar being is personalized according to user's preferences, and/or according to the content of said message and/or according to the content provider's preferences. For instance, the avatar may wear items that relates to the service, the product or the brand that is the subject matter of the message to be displayed.

According to another feature of the invention, the displaying of advertisement invitation step occurs before a user's operation or a user interaction that draws the user's attention following a first type of interstitial event, the method comprising the steps of:

- the device is a mobile device,
- detecting an allowed interstitial event of said first type,
- displaying on the device an advertisement invitation of said selected advertisement, at the end of the advertisement invitation display,
- asking for a consent from the device user to display a main part of said selected advertisement,

if the device user's consent is given,

- displaying on the device said main part of said selected advertisement, at the end of the main part of the advertisement display,
- having the device activity back to the status that was precedent to the advertisement display

According to another alternate feature of the invention, the displaying of advertisement invitation step occurs around a user's operation, following a second type of interstitial event, the method comprising the steps of:

- detecting an allowed interstitial event of said second type,
- displaying on the device a trailer. Preferably, the trailer relates to the advertisement that is supposed to be further displayed at the display step upon reception of a user's consent,

at the end of the trailer display,

- continuing the operation initiated by the user,
- detecting an end of user's operation event,
- displaying on the device an advertisement invitation comprising a request for a consent from the user, the advertisement invitation may optionally comprise a reminder of the advertisement that is supposed to be further displayed,
- if the device user's consent is received, displaying on the device said main part of said selected advertisement.

According to another feature of the invention, the method further comprises a step of generating or updating a log tracing the user's activity on the device.

According to another feature of the invention, said logs are anonymous and signed and/or encrypted, and are gathered in order to analyze behaviour of mobile users.

The logs are used locally in order to update the user's profile on the mobile device.

The invention also concerns a system able to implement said method.

According to another feature of the invention, said system has all the modules and data located on the device, in order to allow functioning when said device is not connected to the network.

Others features, details and advantages of the invention will become more apparent from the detailed illustrating description given hereafter with respect to the drawings on which:

- figure 1 is a diagram of a method according to an embodiment of the invention,
- figure 2 presents an exemplary embodiment of the system,
- figure 3 presents a chronogram of the intercommunications between modules,
- figure 4 is a diagram of a first embodiment,
- figure 5 is a diagram of a second embodiment,
- figure 6 illustrates a number of examples of avatars personalized according to user's profile or according to the content of the message.

The main idea of the invention, to provide non intrusive delivery of message such as an advertisement to a device in a network, is a system, such as a mobile device or a mobile terminal equipped with an agent software or application software, able to run a hereafter described method.

The invention will be described in relation with its preferred embodiment wherein the message to be delivered is an advertisement.

The invention can be applied to any kind of end-user equipment or device receiving data over a network. A device, in the meaning of the invention, can thus be a mobile phone, a smart phone, a game console, a set top box, as well as a branded box, etc. The invention comprises a server and software modules installed on the device.

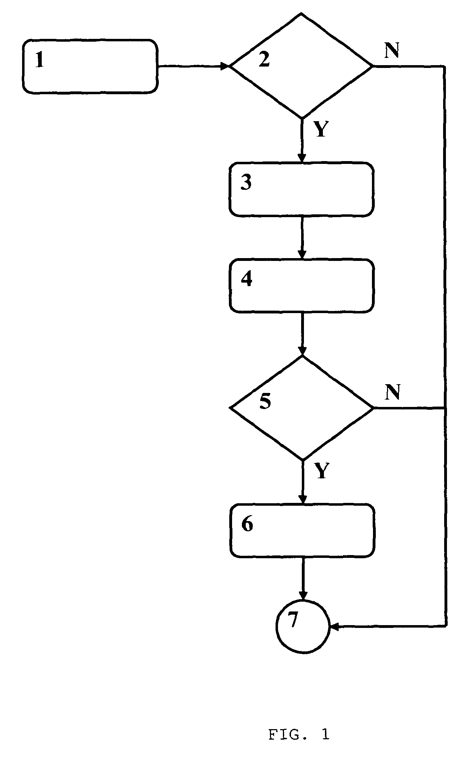

With respect to figure 1, the method starts at a first step 1 triggered by the detection of an interstitial event. Upon arriving, said detected interstitial event is, at step 2, filtered or check according to a device user's profile. Said profile, which will be detailed later, gathers the device user's characteristics, preferences, habits, trigger and settings. Inter alia it comprises means for determining if a given interstitial event is allowed for advertisement delivery purposes by said user. The filtering step 2 thus outputs either a Yes (allowed) or No (rejected) answer.

In case the interstitial event does not match any interstitial event listed in the user's profile, then the method ends at step 7.

In case the interstitial event matches at least an interstitial event listed in the user's profile, then the method goes on with step 3, where an advertisement is selected. Said selecting step 3 compares available advertisements with the user's preferences retrieved in said user's profile, in order to find an advertisement that best matches user's preferences, and so, has the best opportunity to be accepted by said user.

Preferably, the selection of the advertisement to be displayed also takes into account time and place associated to the trigger event.

Said selected advertisement comprises at least an advertisement invitation and a main part. The method then proceeds to step 4 where said advertisement invitation of said selected advertisement is displayed on the device. Since the display of said invitation is rather short (about 2 to 3 seconds), the interruption/intrusion does not last too long.

Then, at the end of the advertisement invitation display step 4, the method proceeds to step 5 and requests the device's user to give his consent to display the corresponding main part of said selected advertisement. Since said main part is longer than the invitation, the intrusion may becomes more important. So prior to burden the user, the method asks for his consent, in order to display.

If the user's answer is No, or no answer is given after a given interval of time, no consent is presumed since default is opt-out, and the method ends at step 7.

If the user's answer is Yes, user's consent has been positively obtained and the method proceeds to step 6.

At step 6 the method displays on the device said main part of said selected advertisement. Said main part may last longer than the invitation, up to e.g. 7-15 seconds. At the end of the display of the main part of the advertisement, the method carries on to step 7 where it ends.

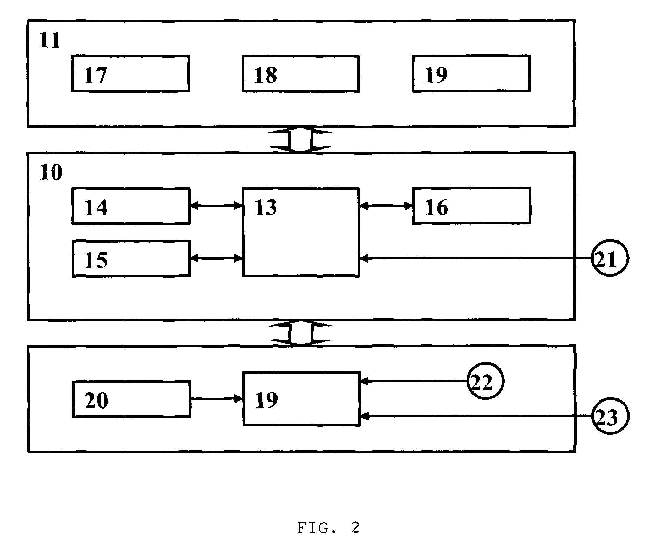

With reference to figure 2 a description will be given of an exemplary system arranged to implement such a method. Said system may e.g. be organized in three parts: a core 10 comprising the main modules, a user interface 11 and a set 12 of low level operating system dependent modules.

In the core 10 one can find a play module 13 being the main module in charge of applying the method. Said play module 13 relies on other modules such as a content manager module 15 in charge of managing the advertisement and among other steps of selecting an advertisement best matched to the user. The profile manager 14 is in charge of establishing and maintaining all the data elements of the user's profile and to provide to others modules the necessary data from said profile when needed or asked. The log manager 16 is in charge of establishing, and distributing logs.

In user interface 11 one can find all the modules able to interface with the user. Among others it may comprises a sound player 17 in charge of playing sounds to the device's user, a graphical engine 18 in charge of displaying visual elements such as text, banner, image, animation or avatar to the user. At least an input manager 19 is in charge of reading inputs from the user.

Low level operating system dependent modules may comprise timers 20, e.g. the one used to generate an "end of time interval" event. One can also find here an event detector module 19 in charge of detecting the events on the fly.

Said events may come from at least three sources. A first source 21 is related to other applications, such as secondary applications present on the device. Source 22 represents events originating from the operating system itself, such as the outcome of an operating system timer. Source 23 represents events originating from the hardware through the operating system, e.g. a key press.

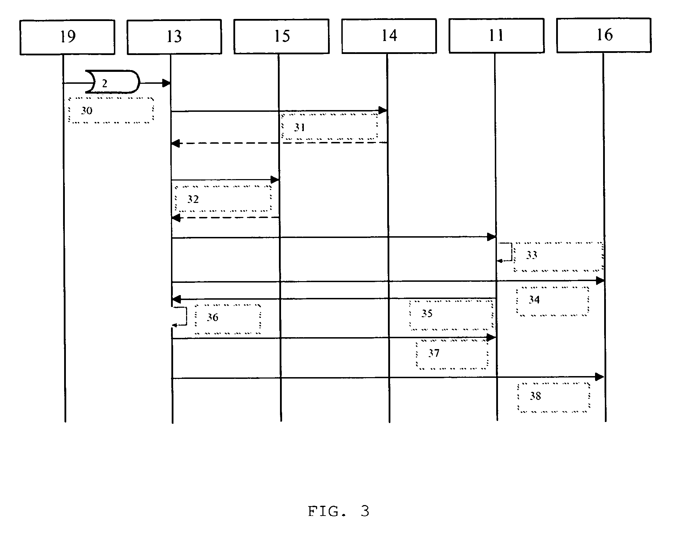

All of the aforementioned modules exchange data in any known manner in order to get their necessary data. The chronogram of figure 3 illustrates a possible embodiment of such intercommunication. The boxes on top of figures are the different modules figured by their reference number in figure 1. The method starts with an event detected by the event detector 19. Said event is filtered 2 at transition 30 toward play module 13. Then the play module 13 asks 31 the profile manager 14 for the user's profile. The profile manager 14 provides in return 31 said user's profile in part or in whole. Then the play module 13 asks 32 the content manager 15 for an advertisement matching said user's profile. The content manager 15 provides in return 31 said selected advertisement. The invitation of said advertisement is then send to the user interface 11 to be displayed 33. The user interface then asks for the user consent. The user's response is then sent back 35 to the play module 13. According to said response, the play module 13 either skips or decides to display the main part of the advertisement. If display is decided, the play module 13 sends 37 said main part of the advertisement to the user interface 11 to be displayed.

Two others communications 34 and 38 are figured to indicate data transfers from play module 13 to the log manager 16.

In order to be sure the user is present and available to use or look at the device, with a better opportunity of drawing his attention, an advertisement proposal is triggered by an interstitial event. In the present patent application, an interstitial event is an event that can be detected and identified at the mobile device and that is supposed to draw the attention of the user. The interstitial event can be initiated by the user or by an external factor.

The interstitial events can be classified in two categories. Firstly, interstitial events gather events that are generated by the hardware device and intercepted by the operating system. Secondly, interstitial events gather events that are generated by the application.

The interstitial event can be taken among the follow events:

"outgoing call setup" said event occurs when the user tries to establish an outgoing call with the device;
"outgoing call on hook" said event occurs when the user hangs up/finishes an outgoing call;
"ingoing call received" said event occurs when an entering call occurs and the user receives it;
"ingoing call on hook" said event occurs when the user hangs up/finishes an ingoing call;
"electronic message editor start" said event occurs when the user starts the electronic message editor; A electronic message is to be considered as any kind of electronic message, e.g. SMS, MMS, etc;
"electronic message send" said event occurs when the user sends the edited electronic message, also indicating that he has finished editing;
"electronic message received" said event occurs when a new ingoing electronic message is received at the device;
"electronic message read", said event occurs when the user has read said ingoing electronic message, also indicating that the receive operation is finished;
"web browsing open" said event occurs when the user starts the web browser;
"web browsing close" said event occurs when the user ends the web browser, also indicating that the web browsing operation is finished;

Others kinds of interstitial events may be used, associated with secondary functions of the device:

"alarm setup" said event occurs when the user configures an alarm on the device;
"alarm outcome" said event occurs when said alarm ends and "rings";
"GPS destination reached" said event occurs when a predetermined destination is reached;

These are only samples, and the one skilled in the art would naturally find many other interstitial events.

Another important paradigm of interstitial event is "end of time interval". In such case the user allows a recurrent "artificial" event, in the form of a periodic or random timer, to create an event based on a time interval. At the end of each such predefined time interval an advertisement proposal may be made and proposed to the user.

Interstitial events issued from the device (low level events) are captured by the event detector module 19. Said event detector 19 implements a set of observers/listeners using the platform specific application programming interfaces (APIs). When an interstitial event occurs the event detector 19 processes it and notifies the play module 13 with this event.

The user is given the possibility to configure the mobile device application to filter some events, that means the user has the possibility to indicate to the application which interstitial events must be detected. Typically the user selects interstitial events among a list of possible ones.

These preference configurations are accessible and defined through the user interface 11 and are stored locally in the user's profile. As further detailed below with reference to step 2, when an event is detected by the mobile device, the detected event is compared to the list of events selected by the user that is stored in the user's profile. In case the detected event matches at least one selected event, then the advertisement invitation or the advertisement trailer can be displayed.

Therefore, through enriching the user's profile with interstitial event selection parameters, the user controls the advertisement service, preventing thereby any unwilling intrusion.

Note: if this is the phase of user selection of interstitial events maybe better to describe deeper since it is a great characteristics of our application: the user control of the service.

The permission of each interstitial event interception is checked each time prior to this interception ensuring priority of user critical events such as emergency calls.

Interstitial events (applications events) from messaging and web activities are intercepted on a different channel using the same approach with observers/listeners.

As messaging is also used by the server to send system control commands to the mobile device application, the event detector 19 module distinguishes between these types of electronic messages and considers only non system electronic messages as interstitial events. When an event is identified, the event detector 19 module notifies the play module 13 with the occurred event.

The event detector 19 module is also responsible of generating random/periodic events. It implements a timer which periodically or randomly triggers these events within a given time interval (event: "end of time interval").

In addition to capturing messaging and call activities the event detector 19 module captures also foreground screen changes and key events entries. These two functionalities can also be used as interstitial events.

One important feature of the invention is the device user's profile. Said user's profile comprises all the information about the user preferences, habits and contexts and user's settings related to trigger necessary to the mobile device application.

Among other, said user's profile comprises, for each interstitial event or event type, some data element that permits to determine if a given interstitial event is allowed. This can takes the form of a table containing each event or event type/class. The allowance can be indicated in said table in the form of a Yes/No element in regard of each event or event type.

Allowance can also be indicated in the form of time or times, time being indicated by at least one time interval. E.g. a given event can be allowed (respectively not allowed) on a given interval of time. Said table then mentions in regard of the event one or more time intervals, e.g. Monday 13:00-15:25, Tuesday 00:00-15:00 and 17:00-23:00 and not 18:00-18:30, etc. Said time intervals may be expressed per day, per week, etc, combined using any Boolean expression, or in any other known way.

Allowance can also be indicated in the form of location or locations. Event becomes allowed when the device (and the user) is located (or not located) in any of the mentioned location(s). Said table then mentions in regard of the event one or more locations, geographical area and/or combinations of them.

In this description location of a device is considered on two scales. On a first coarse scale, the device comprises GSM or other equivalent mobile phone capacity. Location can be considered by looking at the cell to which the device is connected, that is the cell global identifier (CGI). On a second finer scale, the device comprises GPS or other equivalent fine location determination function. Location can thus be considered by indicating areas using geographical coordinates.

Allowance can also be indicated in the form of social context or contexts. The social context concept will be explained latter.

Of course, an allowance may also be indicated by combining time(s), location(s) and/or social context conditions.

Said user's profile also comprises elements to determine the best advertisement to propose to the user. Said elements may comprise the user's preferences for each type/class of advertisement. Said preferences may be all time and/or all locations, but may also be restricted for each advertisement or type of advertisement, by time(s), location(s) and/or social context(s), as previously defined.

A social context, as can be used in user's profile either for event or for advertisement, is a combination of time (s) and location(s). A social context identifies and characterizes a most frequent location of a user in a given time range, typically over a whole day. A social context is derived from a statistical observation of the user's location.

A method to determine a set of social contexts may for instance comprise the following steps: sampling the user's location over time according to a first period, e.g. 10 mn thus providing 144 samples per day, analysing the data sampled over a past time interval, e.g. 30 days, combining a time interval to a most frequently sampled location during said time interval to form a social context. Said method can reapplies the analysing and combining steps over time according to a second period, e.g. each day.

As an example, four social contexts can be used/defined. Be they "home", "work", "leisure" and "other". "home" and "work" are respectively the social context when/where the user is at home or at work. "vacation" is the social context when the user is resting. "other" may be another social context not included in the previous. By statistically analysing the location with respect to the time, it can be determined the following four social contexts:

| Social Context | Start time | Stop time |
| --- | --- | --- |
| Home | 0AM | 7AM |
| Work | 8AM | 6PM |
| vacation | weekend, public holidays | |
| Other | | all other combination |

The determination of a social context may start from given or usual times intervals, and determines associated most frequent locations to each such interval. Here the determination is partially dynamic, inferring from given data explicitly configured by the user.

Here the locations can be considered, as explained previously, either on a cell basis (GSM-CGI) or on a geographical area location basis (GPS).

Once defined, said social contexts, are dynamically maintained/updated by a periodical sampling and analysis process, e.g. each day, over a rolling window, e.g. 30 days.

Once defined, said social contexts may be used to define an allowance over an event or to qualify a preference over an advertisement. Thus a given event may (or may not) be allowed only during "work" context. E.g. advertisements related to sports, holidays may be given a preference during "home" or "leisure" context, while technical or corporate advertisements may be restrained to "work" context.

A user's profile may also contain other elements to help selecting an advertisement. E.g. an editable list of authorized content providers may be included in said user's profile to be considered during the step of selecting an advertisement. This allows creating and maintaining a white list and/or a black list. Said lists may be explicitly edited by the user, or implicitly/dynamically edited by the mobile device application following a repeated acceptance (white list) or a repeated rejection (black list) by the user.

A user's profile further comprises device user's historical behaviour in function of time, place and social context. This can be in the form of a memory of the acceptations/rejections of the user when asked for his consent or in any compiled form. Such information may be used to drive the step of selecting an advertisement.

When an allowed interstitial event occurs, the application looks for a stored advertisement that best matches the user profile in term of user preferences in the specific context, e.g. time and place of the event.

More precisely, when an allowed interstitial event occurs, the play module 13 asks the content manager 15 to fetch an advertisement according to the user's preferences and previous behaviour e.g. historical user data, related to time, location and/or social context. According to the user's profile the play module 13 requests from the content manager module 15 to provide an advertisement which matches the user's personal preferences in the user's profile. The content manager 15 selects the advertisement following its properties and the user's profile. The advertisement selected is then filtered according to the user's access rights, location, authentication settings, etc.

One method to select an advertisement that best matches device user's profile uses a Pearson's correlation formula:

$$r = \frac{\sum XY - \dfrac{\sum X \sum Y}{N}}{\sqrt{\left(\sum X^2 - \dfrac{(\sum X)^2}{N}\right)\left(\sum Y^2 - \dfrac{(Y)^2}{N}\right)}},$$

where r is a correlation coefficient as close to 1 as the correlation is good,
X is the class/subclass. X is predefined on Server and transmitted to the device application. This means that every time an advertisement is provisioned it has not only a class but can also have a set of subclasses (in a range of Z).
Y is the level of interest for each class/subclass,
N is the total number of different classes/subclasses.

In the present invention a class and/or a subclass gathers service(s) and/or product(s) and/or brand(s). A subclass is a sub division of a class. For instance, a class gathers all advertisements related to 'shoes'; a subclass of 'shoes' gathers all advertisements related to 'soccer shoes'; another subclass of 'shoes' gathers all advertisements related to shoes from a given brand.

The best matching advertisement is the advertisement with the correlation coefficient r closest to 1.

Since the aim of the application is to entrust the user and to create an entrusting relationship, in order to get said user more acceptant toward chosen advertisement, it is important to avoid possibly malevolent contents. It is then interesting to secure the application to keep the user safe. For that reason the content provider, (like PV), guarantor of transmitted contents is authenticated by the agent in the agent-server communication before delivering an advertisement to the user's device. Such authentication may be done by any known authentication method such as e.g. a certificate exchange and verification.

To inform the user that the application operates correctly, is trustable, and as a consequence that all transmitted contents are not spam it may be advantageous to display a security logo on the user's device, e.g. by mean of graphical engine 18.

As previously mentioned, an advertisement comprises an invitation and a main part. In order to allow the user to give an informed and meaningful consent when asked for, said invitation is indicative of the content of the main part of the advertisement. The invitation thus provides pertinent information about the proposed advertisement content. Said advertisement invitation comprises a visual part. Said visual part could be optional in certain embodiments.

Said visual part of an advertisement invitation may comprise at least one of the following: a video, a text, a banner, an animation or an image, or any possible combination of these.

Since said invitation may be viewed as a tolerated, but not explicitly allowed/consented interruption of the normal use of the device by the user, its display duration on the device must preferably be kept short. A duration of no more than 3 seconds may be considered acceptable, while maintaining a duration long enough to provide enlightening information about the whole advertisement proposed.

In order to better draw the user attention to the device and to the visual part of said advertisement invitation, said advertisement invitation may further comprise a sound part. Said sound part may be optional. Said sound part may be played during the display duration of the visual part. Said sound part may comprise an audio content, such an option is however restrained to the short duration of corresponding visual part. Preferentially said sound part is a short sound, such a jingle, or a sound strip, preferentially displayed at the beginning or just before the display duration of the visual part, in order to draw the user attention toward the display of the device so as to make him look at the visual part of said invitation.

Said sound part may be personalized according to user's profile or configured according to the content of said advertisement, to content provider's preferences or to service provider's preferences or network operator.

In addition, in order to personalize, and to increase the user's confidence to the mobile device application, the invitation may comprise a graphical animated avatar or any other graphical representation that accompanies its display.

The avatar adds further clarification of the advertisement content, e.g. by mean of visual accessories related to the content of the proposed advertisement. The avatar is typically a graphical 2D/3D interface. Said avatar is able to interact with the user. It is a user's alter ego and part of ensuring the mobile device application. The avatar is a virtual representation of each specific user. The avatar gives to the mobile device application a personalized character which in turn help making the user more comfortable using the application.

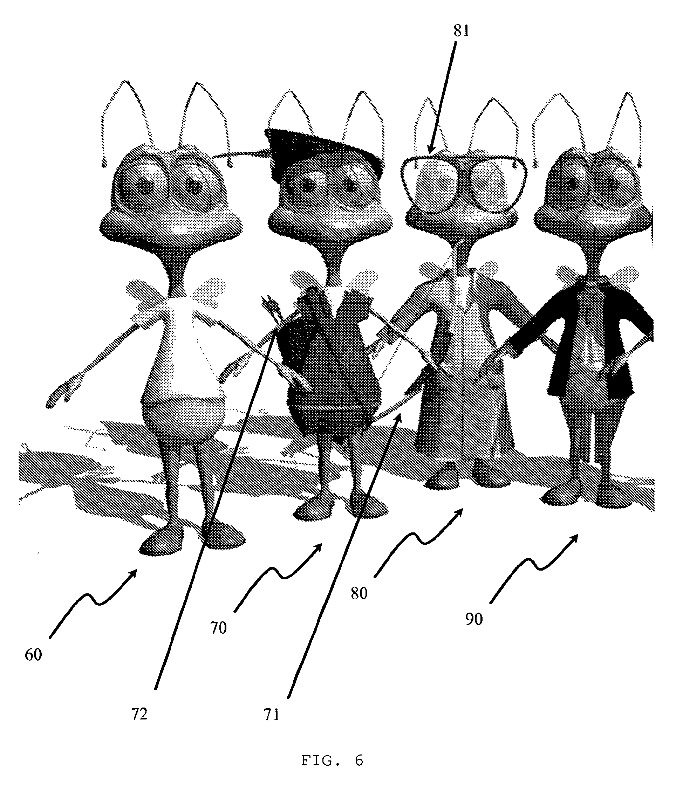

The avatar is typically displayed during the display of the advertisement invitation. Four avatars are illustrated at figure 6.

Said graphical avatar may be personalized according to user's preferences, or may be configured according to the content of said advertisement, to content provider's preferences or to service provider's preferences. The avatar may be selected and have a different behaviour and dressing, depending on the proposed advertisement. The avatar is part of the advertisement invitation, it may include elements of the user's profile and/or it may be related to the advertisement proposed.

Every time an advertisement is selected by the mobile device application, additional information are available thanks to the parameters transmitted by the server together with the advertisement. These parameters specify for example the category of the product (for example: retails, alcoholic drink, classic shoes, ...) and/or the brand.

Different possibilities may be encountered:

- the content provider provides an image/animated image to associate to the advertisement at the campaign definition phase. If so this image is incorporated and taken as invitation;
- the content provider provides only a Brand image. Every time an advertisement is proposed for this Brand the related image is used;
- the content provider has not provided anything. The mobile device application uses "standard" images, e.g. for each product category.

In order to have the invitation adapted to the context, as an example, the avatar can be dressed differently every time. For example if it is raining, the avatar can use an umbrella. If it sunny the avatar can wear sun glasses. Such context information can be retrieved thanks to the interaction with other application of the device.

Other possibilities are related to the user's location or social context. If the user is at home or in a "home" social context, the avatar can be dressed in slippers. If the user is at the office or in a "work" social context, the avatar can hold a PC (of course this depends also if the user is a man or woman and his/her job, all of these can be personalized in the user's profile. If the advertising message to be displayed relates to music, then the avatar may be animated so as to dance.

In practical, the advertiser or content provider sends data concerning the product/service/company to be advertised (e.g "product category" = "high tech device"). This can be done through filling an online form. These data enable to locally, on the device, select features and accessories that define the avatar, e.g. clothes with high tech features such as a shirt with lights that can be retrieved from a local database. The application also locally selects other features or items (e.g. sun glasses, computer, etc.) according to the user's profile and other data (weather, location, etc...). All these data may be used as input of a matrix that enables defining the avatar. E.g. avatar may wear a shirt with lights and sun glasses and use a computer.

Figure 6 illustrates the customization of various avatars. Avatar 60 does not wear specific items. It may be the avatar selected by the user and as displayed by default by the mobile device application.

Avatars 70, 80, 90 are customizations of avatar 60 with additional dressing or items.

Avatar 70 has a bow 71 and arrows 72. Avatar 70 may be displayed when the mobile device detects that the user has reached an archery club or when the message to be displayed relates to archery equipments, services, or information.

Avatar 80 wears eyeglasses 81. Such item 81 can be selected by the user to personalize the avatar. Such item 81 may also be automatically incorporated to the avatar when the device detects that the user enters in an optician shop or that the user is located at his work place which is a laboratory.

The user may also customize the avatar 90 with a tail coat and a bow tie as illustrated by avatar 90.

The visual part, sound part, and avatar are independent. They could start in different timing.

An update of visual part, avatar and/or jingle can be provided to the user's device, by the network, over-the-air (OTA).

In order to further protect user's privacy, the display of an advertisement invitation (and of course also of a main part) on the device may be inhibited. In case of such an inhibition, the display does not even start. This is equivalent to an interstitial event that would not be allowed.

Such an inhibition may be active when the device is in silent mode or meeting mode, thus in accordance with a configuration parameter of the device. Such an inhibition may also be active when the device sound volume is set to zero, since in that case user has indicated that he does not want to be disturbed audibly. Moreover, said invitation has less opportunity to reach its intended target, the user's attention, since any audio part/jingle could not be heard. Such an inhibition may also be active when the user has configured a do-not-disturb option, thus in accordance with a mobile device application configuration parameter.

In a similar way, since the burdening caused by advertisement must be reduced to the least extent, the advertisement display must be kept to a low priority with regards to telephony events only. More generally, the priority of the advertisement display complies with conventional priority standards for mobile phones. Thus, the advertisement display priority is the same as other third-party applications and is lower than the telephony functions. Consequently, the display on the device of an advertisement invitation or of a main part of an advertisement may be interrupted by an incoming phone call. So any event with a stronger priority, that is virtually all events, may interrupt a display. As an example, an incoming/ingoing call ringing the device is displayed on the device at the same time of advertisement play, so that the user may be able to answer to said ingoing call. The user can decide to answer to the call and the video is stopped or to continue playing the advertisement and simply ignores the incoming call. The events that are prioritized under or over an advertisement display may be configured.

Following a different approach, during the display on the device of an advertisement invitation or of a main part of an advertisement, some functions of the device such as user keys may be locked. Of course, these functions are automatically unlocked in case at least a function with a higher priority is initiated. For instance, the keys are unlocked upon reception of an ingoing call. The application is able to check by itself if the advertisement has been completely played or not. Because for example, if there is an incoming call during advertisement play and the user decides to answer, the application knows that the video has been stopped and consequently it will not assign rewards and will propose the video later on. This can be of interest to measure an advertisement campaign impact, and help determine if and when a reward must be allocated to the user to have seen an advertisement. Each operation may thus be configured as lockable or not. For example during a display, be it invitation or main part, the user may not be allowed to start an outgoing call. Such an operation can wait. However he may be allowed to answer an ingoing ringing call.

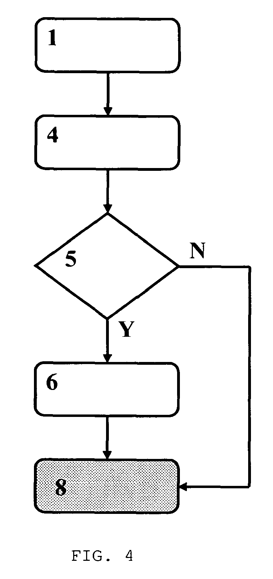

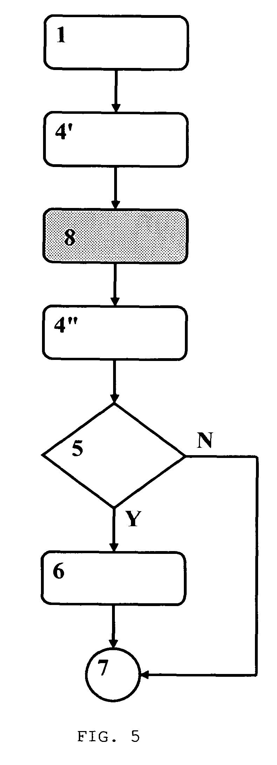

With reference to figures 4 and 5, two approaches will be described for embedding an advertisement delivery with respect to a user's operation. In the first approach, the displaying of advertisement invitation step occurs before the user's operation. In the second approach, the displaying of advertisement invitation step occurs around the user's operation.

In the first approach, illustrated at figure 4, that may be called "invitation first", the advertisement invitation only comprises a single part.

The method starts by detecting 1 an interstitial event of a first type. The method verifies (not figured) if said event is allowed and if no inhibition is active. If No, the advertisement delivery process halts and the method goes directly (not figured) to the execution 8 of the user's operation. If Yes, the invitation of the advertisement is displayed at step 4. Then the user's consent is requested at step 5 for displaying the main part of said advertisement.

If the answer is No, the advertisement delivery process halts and the method goes directly to the execution 8 of the user's operation. If the answer is Yes, the main part of the advertisement is displayed at step 6. At the end of said display, the method goes to the execution 8 of the user's operation.

Such a first approach is better applicable to user's operation that can wait or can be delayed. The events of said first type then correspond to events associated with starting a user's operation that can wait, such as "incoming electronic message", "web browsing open", "electronic message editor start", etc.

A sample scenario for such a first approach may be the following. The user starts a user's operation such as a web browsing. A "web browsing open" interstitial event is then detected at step 1. Said event is then delayed during steps 1-6 depending on the configuration and on the user's choices. At the end, the user's operation is executed at step 8 where the browser is open. In the meantime an advertisement may have been interspaced.

First type interstitial events comprise events related to actions that can be delayed without loosing any important opportunity.

A particular case of first type interstitial event comprises: "end of time interval". For said event, no user's operation is associated, and thus user can wait.

In the second approach, illustrated at figure 5, that may be called "operation first", the advertisement invitation comprises two parts.

The first part is a trailer displayed upon detection of an interstitial event matching the list of interstitial events of the user's profile. It is then very short since operation can not be delayed too much. Its duration may not exceed 3 seconds. It typically comprises a sound part and its purpose is more to draw the user's attention to the service and more particularly to the advertisement itself, than to meaningfully inform the user about the advertisement content. Said first part could be a poster, a video, a text or a banner. The main objective when displaying said first part is to avoid, or at least reduce to the minimum, any interference or modification of user's experience.

The second part could be a little bit longer since it occurs after the user's operation, but it still remains an invitation. Its purpose is mainly to introduce the main part and the request for the user's consent, so it is mainly intended to meaningfully inform the user about the main part's content. It can also advantageously remind the user of the first part, so as to create a repeat.

Both parts may comprise elements among: visual part, sound part, avatar in any combination.

The method starts by detecting 1 an interstitial event of a second type. The method then verifies (not figured) if said event is allowed and if no inhibition is active. If No, the advertisement delivery process halts and the method goes directly (not figured) to the execution 8 of the user's operation. If Yes, the first part of the invitation of the advertisement is displayed at step 4'. At the end of said display, the method starts the execution of the user's operation 8. At the end of the execution of said user's operation, that may be detected by a corresponding event, the method resumes and the second part of the invitation of the advertisement is displayed at step 4". Said displaying step may be conditioned to the previous allowance of step 4'. Then the user's consent is requested at step 5 for displaying the main part of said advertisement.

If the answer is No, the advertisement delivery process halts and the method goes directly to the end step 7. If the answer is Yes, the main part of the advertisement is displayed at step 6. At the end of said display, the method goes to the end step 7.

Such a second approach is better applicable to user's operation that can not wait. The events of said second type then correspond to events associated with starting a user's operation that can not wait.

A sample scenario for such a second approach may be the following. The user wants to edit an electronic message. Upon selection of message editing option a first part invitation is displayed at step 4'.

## Editing a message

Then the electronic message may be written by the user, as operation 8. When the user terminates the edition of the electronic message and select the sending option. the method proceeds with displaying the second part of the invitation at step 4", requesting the user's consent and eventually displaying the main part of advertisement. Here it is the second part of invitation and the main part that are delayed until after the execution of user's operation. At the end the sending notification is displayed to the user

Second type interstitial events comprise events related to operations that can not be delayed without loosing any important opportunity. Second type interstitial event may comprise: "outgoing call setup", "electronic message editor start", "electronic message received", "web browsing open". For each such "starting" event, is correspondingly respectively associated "outgoing call on hook", "electronic message send", "electronic message read", "web browsing close" to indicate the end of user's operation execution.

While some event must be first type event, and some other event must be second type event, some event may be selectively configured to be either first type or second type.

Another example of a second approach may be given in the case of an "Outgoing Call". In that case the advertisement proposal has the following sequence:

1) At "Call Setup" event the first part of invitation is displayed during at most 2-3 seconds, along with animated avatar, and with jingle,
2) The occurrence of a "Call Answer" terminates said display,

3) Call is allowed to progress,

4) The occurrence of an "On Hook" event triggers the display of the second part of invitation, along with animated avatar, and with jingle,

5) A Yes/No choice is proposed to the user to get his consent, at end of said second part display.

In case the interstitial event is an ongoing call, preferably, there is no teaser. Indeed, one cannot foresee whether immediately starting the call is urgent or not. Therefore, the call is not postponed by a teaser.

In that case the advertisement proposal has the following sequence:

1) The application detects an "ingoing call" and does not prevent picking up the call,

3) Call is allowed to progress,

4) The occurrence of an "On Hook" event triggers the display of an invitation, along with an animated avatar and/or with a jingle,

5) A Yes/No choice is requested to the user to get his consent, at end of said invitation display.

According to another feature, the method may advantageously generate a log. Said log may e.g. trace the user activity on the device. Among others, the user's answer (Yes or No) when his consent is requested, is recorded in a log. The log also collects the following data: the class and subclasses of the message, time of the presentation, place of presentation. Optionally, the log may also comprise many parameters related to advertisement such as: an advertisement identifier, the operation associated, the events, version of the log, version of the mobile device application, the device model, the device firmware version, etc...

A log is generated at the device by the log module 16 of the mobile device application.

It is intended to be transferred to the server Gathered logs at server may then be statistically analyzed in order to get a global picture of users' behaviour in relation to advertisement. This allows to produce, from the gathered logs, audience qualification reports, useful information to better address the audience and also to learn about users' activity, in order to increase the acceptance toward advertisement.

Advantageously, a log is anonymous, not retaining any identifier of the user. For security purpose against interception during transfer from the device to the server, log is also signed/encrypted using any known ciphering method.

Statistical analyses from the logs are used to select the advertisements that are sent from the server to the mobile device. This first filtering is only based on anonymous data.

Advantageously, logs are also used locally on the mobile device in order to update user's profile. Thus, according to the actual behaviour of the user in regard to the proposed advertisements, user's profile is modified. This allows constantly updating user's profile even in case communication between the server and the mobile device is interrupted. Therefore, the invention allows significantly increasing the relevancy of the proposed advertisement.

The application is law compliant and auditable, based upon secure electronic logs. The user's consent is given for receiving an authenticated content.

According to an important feature of the invention, the implementation of the mobile device application system is made so that all the necessary elements, that is modules and data, are located on the device. This includes some pre downloaded advertisements already present on the device before the selection step. This allows functioning of the mobile device application, even when said device is not connected to the network and the possibility to deliver advertisements to the user, even in disconnected stand alone mode.

The invention is based on an on-device, on-demand, on-the-spot user opt-in. Said mobile device application resolves the problem of prior art solutions by ensuring a meaningful, contextual user consent and enabling a personal and trusted advertisment service. The invention is requesting the user's meaningful consent, considering the time, location and social context. User opt-in is requested at the point of each advertisement proposal to the user. The user gives an on-demand opt-in, clearly understanding the exact and full content before requesting the advertisement content to be displayed. The user views the advertisement on-demand, i.e. pulled by the user. The user gives his opt-in per advertisement, i.e. every time he accepts to view a specific advertisement. The service is nominally in "opted-out" mode, i.e. the advertisement content is never imposed/pushed on the user. The view of each advertisement only takes place upon user request, i.e. under full user control. This ensures a non-intrusive service to the user.

The invention concerns a method for non intrusive delivery of advertisement to a device in a network comprising the steps of:

- detecting an interstitial event,
- filtering said interstitial event against a device user's profile, to determine if said interstitial event is allowed,
- selecting an advertisement matching said device user's profile,

if said interstitial event is allowed,

- displaying on the device an advertisement invitation of said selected advertisement, at the end of the advertisement invitation display,
- asking for a consent from the device user to display a main part of said selected advertisement,

if the device user's consent is given,

- displaying on the device said main part of said selected advertisement.

## Claims

1. A method for non intrusive delivery of messages to a device, comprising the steps of:

   • at a server:

   - identifying messages according to historical data received from at least the device and
   - sending the identified messages to the device through a network,

   • at the device:

   - receiving the messages,
   - filtering, in function of a user's profile stored in storage means of the device, retained messages to be stored in storage means of the device and messages to be removed from the device,
   - storing retained messages in storage means of the device,
   - detecting (1) an interstitial event,

   **characterized in that** the method also comprises the following steps performed at the device:

   - determining (2) whether said interstitial event matches at least one interstitial event type defined by user's profile stored in the device,
   - if said interstitial event matches at least one interstitial event type defined by the user's profile, selecting (3) among said retained messages a message matching said user's profile,
   - displaying (4) on the device a message invitation, the message invitation comprising a request for a consent from the user (5),
   - in case the device receives a consent from the user, then displaying (5) on the device a main part of said selected message,
   - creating or updating (34) locally a log tracing the user behaviour in regard to the request for consent,
   - updating on the device said user's profile with said log.

2. The method according to the preceding claim, wherein an interstitial event is taken among "outgoing call setup", "outgoing call on hook", "ingoing call on reception", "ingoing call on hook", "dialling a call", "switching between two calls", "electronic message editor start", "electronic message sent", "electronic message received", "moving electronic message from a box to another box", "electronic message read", "web browsing open", "web browsing close", "end of time interval", "alarm setup", "alarm outcome", "GPS destination reached", "time interval lapsed".

3. The method according to any preceding claims, wherein an interstitial event type is **characterized by** at least a time and/or at least a location provided in real time by a location based service (LBS) embedded in the device and/or at least a social context, the social context being based on a statistical observation of user's most frequent locations during a given time period, the social context being chosen depending on the time and among a list of social contexts comprising at least one of the following social contexts: "home", "work", "leisure", "other".

4. The method according to any preceding claims, wherein said user's profile further comprises user's historical behaviour in function of time, place and social context, that may be used to drive the step of identifying messages at the server and/or to drive the step of selecting a message at the device.

5. The method according to any preceding claims, wherein upon selection of a message and before displaying a message invitation, the method comprises a step of providing a trailer message arranged for drawing user's attention; then the trailer message ends allowing thereby the user to freely conduct an operation on the device; then once the operation ends, conducting the step of displaying the message invitation.

6. The method according to any preceding claims, wherein each message is delivered by a content provider, wherein the provider is authenticated before the message is sent to the device and wherein a signal is displayed on the device to indicate to the user that all transmitted contents are not spam.

7. The method according to any preceding claims, wherein the message invitation comprises a visual part, which gives a clue of the content of the main part of the message.

8. The method according to the preceding claim, wherein the visual part comprises a graphical animated avatar, said avatar being personalized according to user's preferences, and/or according to the content of said message and/or according to the content provider's preferences.

9. The method according to any preceding claims, wherein the steps of displaying may be interrupted by an event with a stronger priority.

10. The method according to any preceding claims, comprising a step of generating or updating (34, 38) a log tracing the user activity on the device concerning the response to the request for consent and concerning the full display of the main part of the message, the log being stored in the device.

11. The method according to the preceding claim, wherein said log is anonymous and signed and/or encrypted and wherein said log is sent to a server via the network.

12. The method according to the preceding claim, wherein logs from various mobiles are gathered at a server in order to provide historical data allowing to define interests and behaviours of users.

13. A system for non intrusive delivery of messages to a device in a network, the system comprising a device comprising:

   - means for receiving over the network messages,
   - data storage means storing a user's profile, the user's profile comprising a list of interstitial event types,
   - means for filtering, in function of the user's profile, retained messages to be stored in storage means of the device and messages to be removed from the device,
   - an event detector module (19) arranged for detecting interstitial events,

   **characterized in that** the device also comprises:

   - means for determining whether said interstitial event matches at least one interstitial event type of said list of interstitial event types of the user's profile,
   - a message selector (15) arranged for selecting, among said retained messages, a message matching said device user's profile,
   - a user interface (11, 19) arranged for displaying on the device a message invitation, the message invitation comprising a request for a consent from the user, the user interface (11, 19) being arranged for receiving a consent from the user,
   - display means (11) arranged for displaying on the device a main part of said selected message in case the device user's consent is received from the user,
   - a log manager (19) arranged for creating or updating locally a log tracing the user behaviour in regard to the request for consent,
   - means for locally updating said user's profile according to said log.

14. The system according to the preceding claim, comprising data storage means remotely located from the device and storing a database of messages, a server linked to said database, said server comprising means for receiving and gathering logs from a plurality of mobiles, means for analysing said logs in order to provide historical data describing the behaviour of the users and/or audience, means for identifying among said database messages according to said historical data and means for sending the identified messages to the device through a network.

15. The system according to the preceding claim, where the device is arranged for updating user's profile, selecting messages and displaying messages when said device is not connected to said server.

**Patentansprüche**

1. Verfahren für die nicht intrusive Ausgabe von Nachrichten an ein Gerät, umfassend die folgenden Stufen:

   * auf einem Server:

      - Identifizieren von Nachrichten gemäß historischen Daten, die wenigstens von dem Gerät empfangen wurden und
      - Versenden der identifizierten Nachrichten an das Gerät durch ein Netzwerk,

   * auf dem Gerät:

      - Empfangen der Nachrichten,
      - In Abhängigkeit von einem Benutzerprofil, das in Speichermitteln des Geräts gespeichert ist, Filtern von zurückgehaltenen Nachrichten, die in Speichermitteln des Gerts zu speichern sind, und von Nachrichten, die vom Gerät zu entfernen sind,
      - Speichern von zurückgehaltenen Nachrichten in Speichermitteln des Geräts,
      - Feststellung (1) eines Zwischenräume bildenden Ereignisses,

   **dadurch gekennzeichnet, dass** das Verfahren ebenfalls die folgenden Stufen umfasst, die auf dem Gerät durchgeführt werden:

      - Bestimmen (2), ob das genannte, Zwischenräume bildende Ereignis zu wenigstens einem Zwischenräume bildenden Ereignistyp passt, der vom Benutzerprofil definiert wird, das im Gerät gespeichert ist,
      - wenn das genannte, Zwischenräume bildende Ereignis wenigstens zu einem Zwischenräume bildenden Ereignistyp passt, der vom Benutzerprofil definiert wird, Auswählen (3) einer Nachricht, die zu dem genannten Benutzerprofil passt, aus den genannten zurückgehaltenen Nachrichten,
      - Anzeigen (4) einer Nachrichten-Einladung auf dem Gerät, wobei die Nachrichten-Einladung eine Anfrage nach einer Zustimmung seitens des Benutzers (5) umfasst,
      - in dem Fall, in dem das Gerät eine Zustimmung vom Benutzer erhält, Anzeigen (5) eines Hauptteils der genannten ausgewählten Nachricht auf dem Gerät,
      - Lokales Anlegen oder Aktualisieren (34) eines Protokolls, das das Benutzerverhalten in Bezug auf die Anfrage nach einer Zustimmung nachvollzieht,
      - Aktualisieren des genannten Benutzerprofils auf dem Gerät mit dem genannten Protokoll.

2. Verfahren gemäß dem voranstehenden Anspruch, bei dem ein Zwischenräume bildendes Ereignis aus "Vorbereitung eines abgehenden Anrufs", "Abgehender Anruf auf der Schaltung", "Eingehender Anruf im Empfang", "Eingehender Anruf auf der Schaltung", "Wählen eines Anrufs", "Makeln zwischen zwei Anrufen", "Editor-Start der elektronischen Nachricht", "elektronische Nachricht versandt", "elektronische Nachricht empfangen", "elektronische Nachricht von einer Box in eine andere Box verschieben", "elektronische Nachricht gelesen", "Webbrowsen öffnen", "Webbrowsen schließen", "Ende des Zeitintervalls", "Einstellung des Alarms", "Ausgabe des Alarms", "GPS-Ziel erreicht", "Zeitintervall abgelaufen" genommen wird.

3. Verfahren gemäß einem der voranstehenden Ansprüche, bei dem ein Zwischenräume bildender Ereignistyp durch wenigstens eine Zeit und / oder wenigstens einen Standort gekennzeichnet ist, die / der in Echtzeit von einem standortbasierten Dienst (LBS) bereitgestellt wird, der in das Gerät und / oder wenigstens in einen sozialen Kontext integriert ist, wobei der soziale Kontext auf einer statistischen Beobachtung der häufigsten Standorte des Benutzers während einer bestimmten Zeitperiode basiert, wobei der soziale Kontext in Abhängigkeit von der Zeit und aus einer Liste von sozialen Kontexten ausgewählt ist, die wenigstens einen der folgenden sozialen Kontexte umfassen: "Zuhause", "Arbeit", "Sonstiges".

4. Verfahren gemäß einem der voranstehenden Ansprüche, bei dem das Benutzerprofil weiterhin das historische Verhalten des Benutzers in Abhängigkeit von Zeit, Ort und sozialem Kontext umfasst, das zum Antreiben der Stufe der Identifizierung von Nachrichten auf dem Server und / oder zum Antreiben der Stufe der Auswahl einer Nachricht auf dem Gerät verwendet werden kann.

5. Verfahren gemäß einem der voranstehenden Ansprüche, bei dem bei der Auswahl einer Nachricht und vor der Anzeige einer Nachrichten-Einladung das Verfahren eine Stufe zur Bereitstellung einer Nachsatznachricht umfasst, die dazu eingerichtet ist, die Aufmerksamkeit des Benutzers zu erregen; dann endet die Nachsatznachricht und erlaubt es damit dem Benutzer, eine Operation auf dem Gerät frei durchzuführen; dann, sobald die Operation endet, Durchführen der Stufe der Anzeige der Nachrichten-Einladung.

6. Verfahren gemäß einem der voranstehenden Ansprüche, bei dem jede Nachricht durch einen Inhalts-Provider ausgegeben wird, bei dem der Provider authentifiziert wird, bevor die Nachricht an das Gerät gesendet wird und bei dem ein Signal auf dem Gerät angezeigt wird, um dem Benutzer anzuzeigen, dass alle übermittelten Inhalte kein Spam sind.

7. Verfahren gemäß einem der voranstehenden Ansprüche, bei dem die Nachrichten-Einladung einen visuellen Teil umfasst, der einen Hinweis auf den Inhalt des Hauptteils der Nachricht gibt.

8. Verfahren gemäß dem voranstehenden Anspruch, bei dem der visuelle Teil einen graphischen, animierten Avatar umfasst, wobei der genannte Avatar gemäß den Präferenzen des Benutzers und / oder gemäß dem Inhalt der genannten Nachricht und / oder gemäß den Präferenzen des Inhalts-Providers personalisiert ist.

9. Verfahren gemäß einem der voranstehenden Ansprüche, bei dem die Stufen der Anzeige durch ein Ereignis mit einer höheren Priorität unterbrochen werden können.

10. Verfahren gemäß einem der voranstehenden Ansprüche, umfassend eine Stufe der Erzeugung oder Aktualisierung (34, 38) eines Protokolls, das die Benutzeraktivität auf dem Gerät gemäß der Antwort auf die Anfrage nach Zustimmung nachvollzieht und die komplette Anzeige des Hauptteils der Meldung betrifft, wobei das Protokoll im Gerät gespeichert wird.

11. Verfahren gemäß dem voranstehenden Anspruch, bei dem das genannte Protokoll anonym und unterzeichnet und / oder verschlüsselt ist und bei dem das genannte Protokoll über das Netzwerk an einen Server gesendet wird.

12. Verfahren gemäß dem voranstehenden Anspruch, bei dem Protokolle von verschiedenen Mobilgeräten auf einem Server zusammengefasst werden, um historische Daten bereitzustellen, die die Definition von Interessen und Verhaltensweisen von Benutzern ermöglichen.

13. System für eine nicht intrusive Ausgabe von Nachrichten an ein Gerät in einem Netzwerk, wobei das System ein Gerät umfasst, umfassend:

  - Mittel zum Empfang von Nachrichten über das Netzwerk,
  - Datenspeichermittel, die ein Benutzerprofil speichern, wobei das Benutzerprofil eine Liste von Zwischenräume bildenden Ereignistypen umfasst,
  - Mittel zum Filtern von zurückgehaltenen Nachrichten, die in Speichermitteln des Geräts zu speichern sind, und Nachrichten, die vom Gerät zu entfernen sind, in Abhängigkeit des Benutzerprofils,
  - ein Ereignis-Feststellungsmodul (19), das zum Feststellen von Zwischenräume bildenden Ereignissen eingerichtet ist,

  **dadurch gekennzeichnet, dass** das Gerät ebenfalls umfasst:

  - Mittel zur Bestimmung darüber, ob das genannte, Zwischenräume bildende Ereignis wenigstens zu einem Zwischenräume bildenden Ereignistyp der genannten Liste von Zwischenräumen bildenden Ereignistypen des Benutzerprofils passt,
  - eine Nachrichten-Auswahlvorrichtung (15), die zur Auswahl einer Nachricht, die zu dem genannten Benutzerprofil des Geräts eingerichtet ist, aus den genannten zurückgehaltenen Nachrichten,
  - eine Benutzerschnittstelle (11, 19), die zur Anzeige einer Nachrichten-Einladung auf dem Gerät eingerichtet ist, wobei die Nachrichten-Einladung eine Anfrage nach einer Zustimmung des Benutzers umfasst, wobei die Benutzerschnittstelle (11, 19) eingerichtet ist, um eine Zustimmung vom Benutzer zu empfangen,
  - Anzeigemittel (11), die zur Anzeige eines Hauptteils der genannten ausgewählten Nachricht auf dem Gerät für den Fall eingerichtet ist, dass die Zustimmung des Benutzers vom Benutzer erhalten wird,
  - ein Protokollmanager (19), der zum lokalen Anlegen oder Aktualisieren eines Protokolls eingerichtet ist, das das Benutzerverhalten in Bezug auf die Anfrage nach Zustimmung nachvollzieht,
  - Mittel zur lokalen Aktualisierung des genannten Benutzerprofils gemäß dem genannten Protokoll.

**14.** System gemäß dem voranstehenden Anspruch, umfassend Datenspeichermittel, die entfernt von dem Gerät angeordnet sind und eine Datenbank von Nachrichten speichern, ein Server, der mit der genannten Datenbank verbunden ist, wobei der genannte Server Mittel zum Empfangen und Zusammenfassen von Protokollen von einer Vielzahl von Mobilgeräten, Mittel zur Analyse der genannten Protokolle, um historische Daten bereitzustellen, die das Verhalten der Benutzer und / oder des Publikums beschreiben, Mittel zur Identifizierung von Nachrichten innerhalb der genannten Datenbank gemäß den genannten historischen Daten und Mittel zum Versand der identifizierten Nachrichten auf das Gerät durch ein Netzwerk umfasst.

**15.** System gemäß dem voranstehenden Anspruch, bei dem das Gerät eingerichtet ist, um das Benutzerprofil zu aktualisieren, Nachrichten auszuwählen und Nachrichten anzuzeigen, wenn das genannte Gerät nicht an den genannten Server angeschlossen ist.

**Revendications**

**1.** Procédé de distribution non intrusive de messages à un périphérique, comprenant les étapes suivantes :

à un serveur :

- identification des messages selon les données historiques reçues par au moins le périphérique et
- envoi des messages identifiés au périphérique par un réseau,

au périphérique :

- réception des messages,
- filtrage, en fonction d'un profil utilisateur stocké dans un moyen de stockage du périphérique, de messages archivés pour être stockés dans un moyen de stockage du périphérique, et de messages à supprimer du périphérique,
- stockage de messages archivés dans un moyen de stockage du périphérique,
- détection (1) d'un événement interstitiel,

**caractérisé en ce que** le procédé comprend également les étapes suivantes, réalisées au périphérique :

- détermination (2) de la correspondance ou non dudit événement interstitiel avec au moins un type d'événement interstitiel défini par le profil utilisateur stocké dans le périphérique,
- sélection (3) parmi lesdits messages archivés d'un message correspondant audit profil utilisateur, si ledit événement interstitiel correspond à au moins un type d'événement interstitiel défini par le profil utilisateur,
- affichage (4) sur le périphérique d'un message d'invitation, ledit message d'invitation comprenant une demande de consentement de l'utilisateur (5),
- affichage (5) sur le périphérique d'une partie principale dudit message sélectionné, si le périphérique reçoit un consentement de l'utilisateur,
- création ou mise à jour (34) locale d'un journal pour suivre le comportement de l'utilisateur quant à la demande de consentement,
- mise à jour sur le périphérique dudit profil utilisateur avec ledit journal.

**2.** Procédé selon la revendication précédente, dans lequel un événement interstitiel est pris parmi les événements suivants : « établissement appel sortant », « raccrochage appel sortant », « réception appel entrant », « raccrochage appel entrant », « composition d'un numéro », « commutation entre deux appels », « début édition message électronique », « message électronique envoyé, « message électronique reçu », « transfert message électronique d'une boîte à une autre », « message électronique lu », « navigation web ouverte », « navigation web fermée », « fin d'intervalle de temps », « configuration alarme », « résultat alarme », « atteinte destination GPS », « intervalle temps écoulé ».

**3.** Procédé selon l'une quelconque des revendications précédentes, dans lequel un type d'événement interstitiel est **caractérisé par** au moins un temps et/ou au moins un lieu fourni en temps réel par service basé sur la localisation (SBL) intégré au périphérique et/ou au moins un contexte social, le contexte social étant basé sur une observation statistique des localisations les plus fréquentes d'un utilisateur pendant une période de temps donnée, le contexte social étant choisi en fonction du temps et dans une liste de contextes sociaux comprenant au moins un des contextes sociaux suivants : « maison », « travail », « loisirs », « autres ».

4. Procédé selon l'une quelconque des revendications précédentes, dans lequel ledit profil utilisateur comprend en outre un comportement historique de l'utilisateur en fonction du temps, du lieu et du contexte social, qui peut être utilisé pour déterminer l'étape d'identification de messages au serveur et/ou pour déterminer l'étape de sélection d'un message au périphérique.

5. Procédé selon l'une quelconque des revendications précédentes, dans lequel lors de la sélection d'un message et avant l'affichage d'un message d'invitation, le procédé comprend une étape de fourniture d'un message d'annonce prévu pour attirer l'attention de l'utilisateur ; le message d'annonce se termine ensuite pour permettre à l'utilisateur de conduire librement une opération sur le périphérique ; puis une fois l'opération terminée de conduire l'étape d'affichage du message d'invitation.

6. Procédé selon l'une quelconque des revendications précédentes, dans lequel chaque message est distribué par un fournisseur de contenu dans lequel le fournisseur est authentifié avant l'envoi du message périphérique et dans lequel un signal est affiché sur le périphérique pour indiquer à l'utilisateur que l'ensemble des contenus transmis n'est pas un message non sollicité.

7. Procédé selon l'une quelconque des revendications précédentes, dans lequel le message d'invitation comprend une partie visuelle, qui donne une indication sur le contenu de la partie principale du message.

8. Procédé selon la revendication précédente, dans lequel la partie visuelle comprend un avatar animé graphique, ledit avatar étant personnalisé selon les préférences de l'utilisateur, et/ou selon le contenu dudit message et/ou les préférences du fournisseur de contenu

9. Procédé selon l'une quelconque des revendications précédentes, dans lequel les étapes d'affichage peuvent être interrompues par un événement de priorité plus grande.

10. Procédé selon l'une quelconque des revendications précédentes, comprenant une étape de génération ou de mise à jour (34, 38) d'un journal de suivi de l'activité de l'utilisateur sur le périphérique concernant la réponse à la demande de consentement et l'affichage complet de la partie principale du message, le journal étant stocké dans le périphérique.

11. Procédé selon la revendication précédente, dans lequel ledit journal est anonyme et signé et/ou crypté, et dans lequel ledit journal est envoyé à un serveur par le réseau.

12. Procédé selon la revendication précédente, dans lequel des journaux de différents mobiles sont collectés dans un serveur pour fournir des données historiques permettant de définir les intérêts et les comportements d'utilisateurs.

13. Système de distribution non intrusive de messages à un périphérique dans un réseau, le système comprenant un périphérique comportant :

- un moyen de réception des messages sur le réseau,
- un moyen de stockage de données pour stocker un profil utilisateur, celui-ci comprenant une liste de types d'événements interstitiels,
- un moyen de filtrage, en fonction du profil utilisateur, de messages archivés à stocker dans un moyen de stockage du périphérique et de messages à supprimer du périphérique,
- un module détecteur d'événements (19) prévu pour détecter des événements interstitiels, **caractérisé en ce que** le périphérique comprend également :
- un moyen pour déterminer si un événement interstitiel correspond au moins à un type d'événement interstitiel de ladite liste de types d'événements interstitiels du profil utilisateur,
- un sélecteur de messages (15) prévu pour sélectionner, parmi lesdits messages archivés, un message correspondant audit profil utilisateur du périphérique,
- une interface utilisateur (11,19) prévue pour afficher sur le périphérique un message d'invitation, le message d'invitation comprenant une demande de consentement de l'utilisateur, l'interface utilisateur (11,19) étant prévu pour recevoir un consentement de l'utilisateur,
- un moyen d'affichage (11) prévu pour afficher sur le périphérique une partie principale dudit message sélectionné, dans le cas où le consentement de l'utilisateur du périphérique est reçu de l'utilisateur,

- un gestionnaire de journal (19) prévu pour créer ou mettre à jour localement un journal de suivi du comportement de l'utilisateur quant à la demande de consentement,
- un moyen pour mettre à jour localement ledit profil utilisateur selon ledit journal.

**14.** Système selon la revendication précédente, comprenant un moyen de stockage des données situé à distance du périphérique, et stockant une base de données de messages, un serveur relié à ladite base de données, ledit serveur comprenant un moyen de réception et de collecte de journaux d'une pluralité de mobiles, un moyen d'analyse desdits journaux de manière à fournir des données historiques décrivant le comportement des utilisateurs et/ou la fréquentation, un moyen d'identification de messages dans ladite base de données selon lesdites données historiques, et un moyen pour envoyer les messages identifiés au périphérique à travers un réseau.

**15.** Système selon la revendication précédente, dans lequel le périphérique est prévu pour mettre à jour le profil utilisateur, sélectionner et afficher des messages lorsque ledit périphérique n'est pas raccordé audit serveur.

FIG. 1

FIG. 2

FIG. 3

FIG. 4

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7586956 B